# EUROPEAN PATENT SPECIFICATION

(11) **EP 2 654 459 B1**
(45) Date of publication and mention of the grant of the patent: **08.02.2017**
(21) Application number: 11804543.4
(22) Date of filing: 19.12.2011
(51) Int. Cl.: A23L 29/288, A23L 29/269, A23L 27/60

(54) **DRESSING COMPRISING GLUCOMANNAN**
DRESSING MIT GLUCOMANNAN
SAUCE CONTENANT DU GLUCOMANNANE

(30) Priority: 22.12.2010 US 976527
(43) Date of publication of application: 30.10.2013
(73) Proprietor: Unilever N.V., 3013 AL Rotterdam (NL); Unilever PLC, London EC4Y 0DN (GB)
(72) Inventor: FRYE, Richard, Keith, Lisle IL 60532 (US)
(74) Representative: Fijnvandraat, Arnoldus
(86) International application number: PCT/EP2011/073175
(87) International publication number: WO 2012/084771

(56) References cited:
- EP-A1- 0 479 126
- WO-A1-2011/033807
- WO-A1-2011/086217
- DE-U1-202008 002 629
- GB-A- 2 137 066
- JP-A- 3 039 065
- JP-A- 57 122 748
- US-A- 4 582 714
- US-A- 5 116 631
- US-A- 5 462 761
- US-A- 6 048 564
- DATABASE WPI Week 200518 Thomson Scientific, London, GB; AN 2005-168092 XP002668935, & JP 2005 040039 A (FUJIOKA S) 17 February 2005 (2005-02-17)
- DATABASE WPI Week 200364 Thomson Scientific, London, GB; AN 2003-673967 XP002668936, & JP 2003 102424 A (NIPPON MARUTEN SHOYU KK) 8 April 2003 (2003-04-08)
- DATABASE WPI Week 200340 Thomson Scientific, London, GB; AN 2003-424038 XP002674209, -& JP 2002 335880 A (KIBUN SHOKUHIN KK) 26 November 2002 (2002-11-26)

## Description

### BACKGROUND OF THE INVENTION

Bound Salads are foods very much appreciated by many consumers. Bound Salads are salads that made with various inclusions such as meats, vegetables, fruits and carbohydrates. Examples of meats include tuna fish, chicken and ham. Examples of vegetables include cabbage, onions, celery, carrots. Examples of fruits include mangos, pineapples and apples. Examples of carbohydrates include pasta and potatoes, Bound salads are typically held together with a viscous mayonnaise and/or mayonnaise like dressing. A bound salad typically holds it shape once plated. Examples of bound salad include tuna salad, pasta salad, chicken salad, egg salad, fruit salad and potato salad.

Unfortunately, it is not uncommon for bound salads prepared for use in restaurants and other commercial food dispensing establishments to lose their consistencies during the course of use. This problem is often remedied by addition of further mayonnaise or other dressing to the salad to "thicken" it, and draining the salad to remove excess liquid caused by the watering out (weeping) of the salad over time. Nevertheless, it is undesirable for the bound salad to lose consistency during the course of the day because consumers might inadvertently be served, looser, less palatable and attractive-looking salads. Moreover, effort and cost are expended in adding additional mayonnaise or other dressing to the salad as the day (or days) progress(es). Indeed, some venders do not change out the bound salads completely for up to a week. They just keep adding more mayo dressing and draining. Therefore, not only does the loss of consistency entail use of more labor, but it decreases microbiological stability since the bound salad sees more handling over time.

Numerous documents in the patent and scientific literature concern salad dressings and other water-containing foods. These include WO 00/69271, WO09/01371, KR 2007/0091715, US 5,922,391, US 6,544,573, JP 2000050838, JP 58047463, JP 59224666, JP 58013366, JP 57091172, US 4, 278, 692, JP 60049763, JP 58149657, US 4, 269, 974, CN 101411416, JP 60237960, WO 04/045311, JP 56008644, RU 2379974, RU 2371010, RU 2371011, KR 2009011663, JP 07274893, SU 1708254, EP 271132, JP 59014767, JP 57206360, JP 2006/230330, US 5, 721, 004, WO 848648, EP 758531, JP 9299058, US 5,641,533, WO 98/48638, Kampmann, Zeitschrift, 1995, 46(10), 44 plus 46-47 entitled "Carrageenans in Dressings," Muschiolik, Food Hydrocolloids, 1989, 3(3), 225-34 entitled "Influence of Xanthan Gum or Low Methoxy Pectin on Protein-Stabilized Emulsions," Benech, Food and Beverage Asia, 2005, (Oct.-Nov.), 45-47, "Gums and Freezers," LuraLean from AHD International, LLC brochure.

The LuraLean brochure describes non-calorie satiating fiber products said to be premier in texture and lighter in calories. The brochure discloses use of fiber from the Asian konjac plant for weight loss, cholesterol lowering, digestion improvement and blood sugar control. LuraLean® is said to be a highly purified konjac gum which is 97-99% fiber. Water absorption is said to be X200 as compared to X3 for Benefiber and X10 for Metamucil. LuraLean benefits are said to include cost reduction, yield (reduced loss) and texture and mouth feel improvement. Food functionalities for soluble fibers are said to include use as thickeners, bulking agents, stabilizers, film formers, border binding, and texturizing to improve mouth feel and fat/storage replacement. In dressings, dips, sauces and stews the product is said to function to regulate calorie absorption, improve texture and for superior flavor.

A paper entitled the LuraLean Advantage, indicates that while other glucomannans lose their viscosities in solution due to traces of hydrolytic enzymes which eventually break down the fiber, LuraLean is characterized by a strong and elastic gel. Several grades are said to be commercially available including those applicable to baking, dressings, yogurt, meat, pasta, dairy and a delayed fibration fiber for beverage use. LuraLean is said to have no taste sensory impact and to retain up to 200 times its weight in water. The thermally stable gel is said to allow for fat substitution. In terms of food functionality, the LuraLean fiber is said to be used as a binder, fat replacer, moisture stabilizer, texturizer, phosphate eliminator, emulsion stabilizer and even can prevent color leeching in layered food products.

US5116631 discloses low-calorie foods containing konjak mannan.

### SUMMARY OF THE INVENTION

The invention concerns the discovery that salad dressings can enjoy decreased separation with the addition of a source of glucomannan, especially at from 0.1 wt% glucomannan and higher. Glucomannan absorbs substantial amounts of water and, as such, prevents "watering out" of the salad. Moreoever, glucomannan is resistant to certain enzymes released by the inclusions such as cabbage, onions, carrots and fruits such as apple and papaya, etc. Particularly important in this respect are amylases. By virtue of its resistance to amylase, glucomannan can thicken dressings in light products such as light mayonnaise, which often include starches subject to degradation by amylase, with little or minimal "watering out" in extended use. Therefore, glucomannan does not suffer from the same deficiencies of many other ingredients used to thicken or provide stability for the product.

A preferred source of glucomannan is the konjac plant. Konjac is available in several forms, including konjac flour. konjac gum, and konjac glucomannan.

The level of glucomannan in the dressing is from 0.5 wt% to 10 wt%. Especially preferred is from 0.5 wt% to 8 wt% glucomannan. Most preferred is from 0.5 to 1.5 wt%.

The salad dressing according to the invention is an emulsion comprising oil and water, and is preferably an oil in water emulsion. Typical levels of oil are from 5-90 wt% and for water from 5-90 wt%.

The dressings of the invention avoid the watery breakdown over time which can occur in the presence of amylase-containing ingredients in bound salads. In addition to improved visual appearance over time by avoidance of surface drying and other drying of the dressing, and the decrease in operator work hours needed to maintain the bound salad by stirring and/or by addition of more dressing, control of moisture in accordance with the invention results in improved product yield.

### DETAILED DESCRIPTION OF THE INVENTION

The invention is relevant to water-continuous products such as dressings. This would include products such as salad dressings, tartar sauce, condiments, and mayonnaise. The invention is particularly relevant to mayonnaise and to bound salads. Other products in which the invention may be used include water-continuous spreads.

Konjac is available primarily in three forms: as Konjac flour, raw, dried and ground, as Konjac gum which is partially processed and konjac glucomannan. Konjac glucomannan is available as LuraLean® RS from AHD International, LLC of Atlanta, Georgia and manufactured by Shimizu Chemical Company of Hiroshima, Japan, as a purified product having a glucomannan level of over 95%, and a water binding capability of up to 200 %. Luralean® TSU includes almost 95% glucomannan (93%-94.5%).
Examples of bound salads wherein the invention may be employed include coleslaw, tuna salads, potato salads, and chicken salads. The invention improves bound salads because of its moisture holding capability and its amylase resistance. Therefore, inclusions which may be used in the salad that impart moisture, amylase or both include: cabbage, tuna fish, other fish, potatoes, chicken, other meat, such as meat like ham and bacon bits or particulates, vegetable pieces or particulates such as onion, cabbage, carrots or cucumber, fruit bits or particulates, eggs, pasta, fruit, egg plant, tomato, sugar, salt, vinegar, water, spices, herbs, flavors, juices, condiments and cheese.

Levels of inclusions that impart moisture, amylase or both in the bound salad of the invention will typically be from 1 to 90 wt% preferably from 5 to 85 wt%, most preferably from 10 to 80 wt%. Typically, the bound salad will comprise from 10 to 60 wt% salad dressing (i.e. excluding the inclusions), especially from 15 to 50 wt%, most preferably from 20 to 40 wt% salad dressing.

One component of salad dressing compositions of the invention will typically be an oil phase. Examples of suitable oils and fats for use in the oil and/or fat phase of the salad dressing composition of the invention include sunflower seed oil, rapeseed oil, soybean oil, olive oil, avocado oil, mustard oil, coconut oil, cottonseed oil, fish oil, flax seed oil, grapeseed oil, palm oil, palm kernel oil, peanut oil, canola oil, safflower oil, sesame seed oil, shea, whale oil, lard, tallow and mixtures of one or more of them. One or more oils are used at from 5-90 wt% of the dressing (not including the weight of any inclusions), preferably from 5-80 wt%, more preferably from 15-50 wt%, especially from 20-40 wt%.

It is noted that in lieu of oil or in combination with oil, fat substitutes may be used. Preferred fat substitutes employable in this invention include fatty acidesterified alkoxylated glycerin compositions as well as sucrose fatty acid polyesters (olestra). The former and latter are described in U.S. Pat. Nos. 5,516,544 and 6,447,824, respectively, the disclosures of which are incorporated herein by reference. Fat may also be replaced by inulin. When employed, such conventional fat substitutes preferably make up at least about 30%, and most preferably, at least about 75% of the total weight of the oil used in the emulsion, excluding any inclusions.

Use of partially hydrogenated fats is possible, but not preferred, due to the formation of trans- fatty acids. In addition to partial hydrogenation, if desired oil/fats may be used which have been subjected to full hydrogenation, interesterification, fractionation and/or refining. The terms fat and oil are used interchangeably herein, with the proviso that it will generally be preferred that the oil is pourable at 22,22 °C (72 °F).

Water is used at from 5-90 wt%, especially from 20-70 wt%, preferably from 30-60 wt% of the food compositions of the invention, not counting the weight of inclusions. Any ingestable water source or sources can be used, for example, pure water (i.e. reverse osmosis water), tap water, bottled water, deionized water, spring water or a mixture thereof.

In order to be appreciated as an acceptable salad dressing, the composition will normally contain acetic acid in an amount from 0.1 to 8% by weight of the aqueous phase.
Types of acidulants which may be used in this invention include, without limitation, acetic acid (e.g., from vinegar), citric acid (e.g. from lemon juice), hydrochloric acid, lactic acid, malic acid, phosphoric acid, glucono-delta-lactone, ascorbic acid, fumaric acid, tartaric acid, gluconic acid, succinic acid, adipic acid and mixtures thereof or the like. Among the types of vinegar which can be included are one or more of red wine vinegar, distilled white vinegar, balsamic vinegar and corn sugar cider vinegar. Juices which can be used include lemon juice, lime juice, grapefruit juice, onion juice, onion puree, garlic juice, garlic puree, apricot puree, tomato juice, and mixtures of one or more thereof. The total amount of acidulant employed ranges from 0.1-60 wt%, especially 0.5-20 wt% by weight of the total weight of the dressing composition, excluding any inclusions.

The overall pH of the salad dressing compositions according to the invention preferably is between 2.5 and 5.0. Especially preferred is between 3.0 and 4.3.

Preferably the dressings of the invention include one or more emulsifiers, although emulsifiers may be omitted or present in minute amounts (e.g., 0-0.05wt%, especially 0.01-0.05wt%), particularly if oil is omitted or present in low levels. The emulsifier(s) used to make the dressing composition of this invention typically has an HLB of greater than about 8.0, and preferably, greater than about 11.0, and most preferably, from about 12.0 to about 18.0, including all ranges subsumed therein. Some examples of suitable emulsifiers include monoglycerides, diglycerides, phospholipids (e.g., lecithin), diacetyl tartaric acid esters of mono- and di-glycerides (i.e. DATEM) and polyglycerol esters. Illustrative examples of such an emulsifier suitable for use in this invention include, without limitation, PEG 20 tristearate, PEG 20 trioleate, PEG 20 monostearate, PEG 20 monoleate, PEG 20 monopalmitate and PEG 20 monolaurate sorbitan, derivatives thereof, mixtures thereof or the like, as made available by, for example, ICI Surfactants under the names Tween or Span.

Other emulsifiers which may be employed in this invention are proteins, like fruit, vegetable (e.g., pea protein), milk (e.g., whey) or soy protein, or mixtures thereof. Another type of protein suitable for use in this invention is phospholipoprotein (e.g., phospholipoprotein present in egg yolk, whole egg or enzyme modified egg) and especially, egg yolk derived phospholipoprotein modified with phospholipase A as discussed in U.S. Pat. No. 5,028,447, the disclosure of which is incorporated herein by reference. In a most preferred embodiment, however, the emulsifier used in this invention is unmodified whole egg (i.e., egg white and egg yolk blended). Another type of emulsifier would be mustard or mustard oil.

Typically, the amount of emulsifier used in the dressing compositions is from about 0.05% to about 20%, and preferably, from about -0.1 % to about 15% and most preferably, from about 0.2% to about 8% by weight, especially preferably 0.24 wt%, more preferably about 3 wt% based on weight of the dressing or other food composition (not counting inclusions) and including all ranges subsumed therein.

Especially preferred compositions have no starch, are essentially starch free (less than 0.05 wt% starch) or are are substantially starch free, i.e., have less than 0.1 wt% starch, since amylase may degrade the starch.

Optionally, in addition to other inclusions, flavoring ingredients such as one or more of salt, pepper, mustard, monosodium glutamate, herbs and spices such as red bell pepper puree, roasted red bell pepper puree, garlic, red bell pepper gran, minced garlic, minced onion, and paprika are incorporated into the food composition, which is preferably an emulsion. The total amount of other flavoring ingredients preferably is 0.01-4 wt% in the dressing or other product, excluding the other inclusions. Other optional additives including chocolate, nut paste, vitamins, natural and/or artificial flavors, and colors (e.g., beta carotene), fruit puree, anti-oxidants, buffering agents such as sodium acetate, potassium acetate, sodium citrate, potassium citrate, disodium phosphate, dipotassium phosphate and mixtures thereof, tomato paste, vegetable bits or particulates, fruit bits or particulates, cheese, mixtures thereof or the like. Such optional additives, when used, collectively and typically, do not make up more than about 40% by weight of the total weight of the dressing or other food composition, excluding any inclusions which secrete amylase or release moisture. When used, they will typically comprise at least 0.1 wt%, especially at least 0.5 wt%, and more usually at least 1 wt% of the dressing or other food composition of the invention.

When any oil phase present is not immediately mixed with the water phase, it is convenient to add at least a part of the optional ingredients to the oil phase. Preferably, the optional ingredients are admixed with the acid water phase which is then emulsified with the oil phase yielding the emulsion of the invention.

In addition to the glucomannan, if desired the water phase may be stabilized by incorporating any water phase stabilizer or texturizers. Suitable stabilizers are e.g. one or more of gelatin, gums, such as cellulose, locust bean, tamarind, xanthan, a carrageenan such as lambda-carrageenan, kappa-carrageenan, mucarrageenan, theta-carrageenan, pi-carrageenan, beta-carrageenan, iotacarrageenan, nu-carrageenan, or xi-carrageenan, guar gum, gum ghatti, gum tragacant, furcellaran, curdlan, gellan, agar-agar, microcrystalline cellulose, carboxymethyl cellulose, an alginate such as propylene glycol alginate, pectin, modified starches and proteins. Gums in addition to the konjac gum or glucomannan source may be essentially absent (e.g., 0-0.05 wt%) or present at from 0.05-1 wt%, preferably 0.1-1%, especially from 0.1-0.3% by total weight of the dressing compositions, excluding any other inclusions. If a gum is to present in addition to glucomannan, xanthan is preferred. Yogurt may also be included, full fat, low fat or fat free, at from 0.5-60 wt%, especially from 10-40wt% of the dressing, excluding any other inclusions.

Preferred preservatives (from 0.001 wt% to 0.5 wt%) suitable for use in this invention include sodium benzoate, potassium benzoate, potassium sorbate, sorbic acid, benzoic acid, mixtures thereof or the like. Anti-oxidants suitable for use in this invention include a tocopherol, ascorbic acid, ascorbyl palmitate, tertiary-butyl hydroquinone, mixtures thereof or the like at from 0.001 wt% to 0.2 wt%. Chelators suitable for use in this invention include EDTA and its salts, sodium tripolyphosphate, sodium carbonate, potassium carbonate, mixtures thereof or the like at from 0.001 wt% to 0.3 wt%, excluding any other inclusions.

Still other additives which may be optionally used in the dressing of this invention include protein sources and sweeteners, such as one or more sugars. The former, preferably at from 0.2 to 50wt%, especially at from 0.5 to 25 wt%, include casein, caseinate, skimmed milk powder and whey, and mixtures thereof, and the latter include syrups, sucrose, glucose, saccharin, aspartame, sucralose, acesulfame potassium, dextrose, maltodextrin, lactose, levulose, maltose, honey, high fructose corn syrup, mixtures thereof or the like, weight percentages exclusive of other inclusions. Natural sweeteners are preferably present at from 0.01 to 20 wt%, especially from 0.1 to 10 wt%, excluding other inclusions. Artificial sweeteners are preferably present at from 0.001 to 20 wt%, especially from 0.01 to 10 wt%, excluding other inclusions. Beta carotene may be included at 0.001 to 2 wt% for color, excluding other inclusions.

If desired, an antifoam may be included at from 0.01 to 1 wt%, excluding other inclusions.

The emulsion is prepared by stirring the oil phase into the water phase at a temperature of 10-40°C., preferably at ambient temperature, under high shear conditions, preferably with a high convection effect. Suitably a high shear, high speed blender of a type which is usually applied for dressing manufacture is used for that purpose. Stirring is continued until the oil phase is totally dispersed into the water phase.

If not indicated otherwise, all weight % used throughout this specification and claims are calculated before addition of inclusions into the compositions. Levels for Bound Salads are calculated with all inclusions added.

All ranges stated herein include all ranges subsumed therein.

### Example 1

A mayonnaise-like product was prepared with the following ingredients:

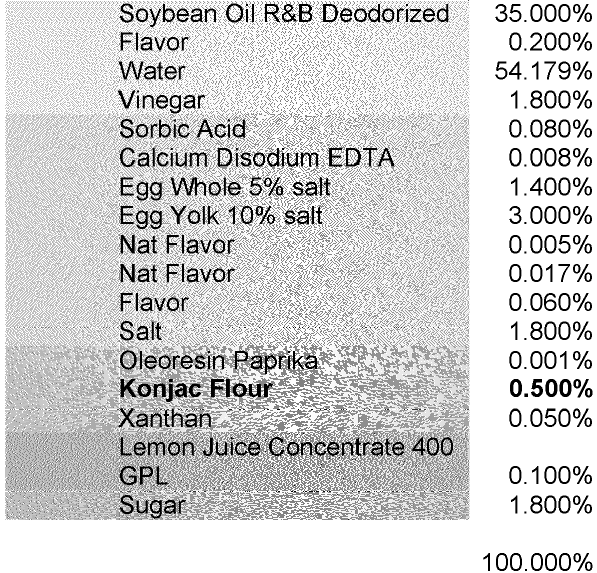

### Example 2

A mayonnaise-like product was prepared using the following ingredients.

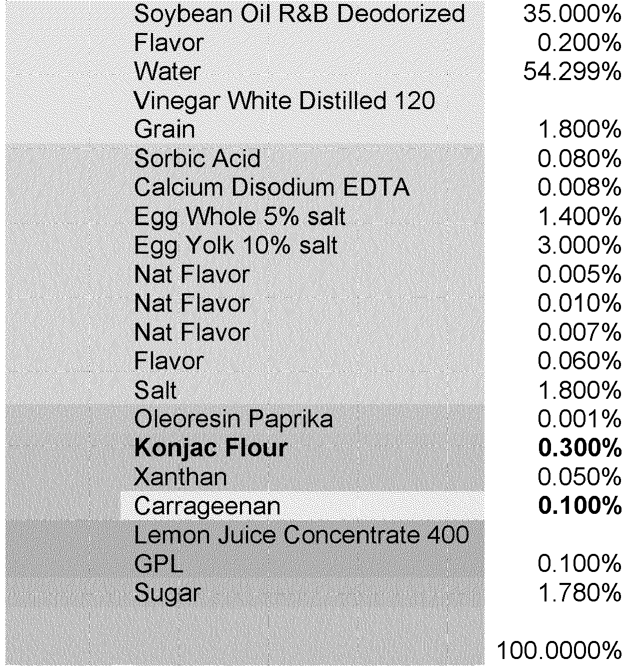

### Example 3

Bound Salad Performance Test
Salad Binding/Coleslaw Salad

### Recipe: Coleslaw:

240 g Cabbage
120 g Carrots
60 g Onions
200 g of Mayonnaise or mayonnaise-like product

### Procedure:

The ingredients are cleaned and cut using a 1.4 mm cutting machine=nr. 7 Berkel
The ingredients are mixed together.
The ingredients are kept chilled for 72 hours.
Color is checked.
After 72 hours salad is drained in a sieve for 5 minutes and the amount of liquid is measured.
Water syneresis is observed.

**RESULTS: 72 HOURS**

| **Sample** | **Amount of drained liquid in Grams** |
|---|---|
| Example 1 | 5.47 grams |
| Example 2 | 0.42 grams |
| Commercial mayonnaise extra heavy 1 | 10.82 grams |
| | |
| Commercial mayonnaise extra heavy 2 | 21.98 grams |
| Commercial mayonnaise light | 182.49 grams |
| Commercial mayonnaise 1 | 18.91 grams |
| Commercial mayonnaise 2 | 3.57 grams |
| Commercial mayonnaise 3 | 22.78 grams |

The results show that water binding in the konjac-containing compositions is exceller This is particularly the case in comparison with the commercial light mayonnaise, which included xanthan gum, lemon and lime peel fibers and modified corn starch. Amylase enzymes in the cabbage, carrot and onion inclusions degrade the modified corn starch in the light mayo causing it to loose its viscosity and structure. Therfore it is unable to absorb moisture. The konjac containing compositions, although also having "light" amounts of oil, had excellent water binding since the konjac was not degraded by the amylase enzymes. Commercial Mayonnaise 2 contains high level of whole egg. Comparing the results for Examples 1 and 2, it can be seen that increasing the level of konjac significantly improves binding performance.

### Example 4

A mayonnaise-like product was prepared from the following ingredients.

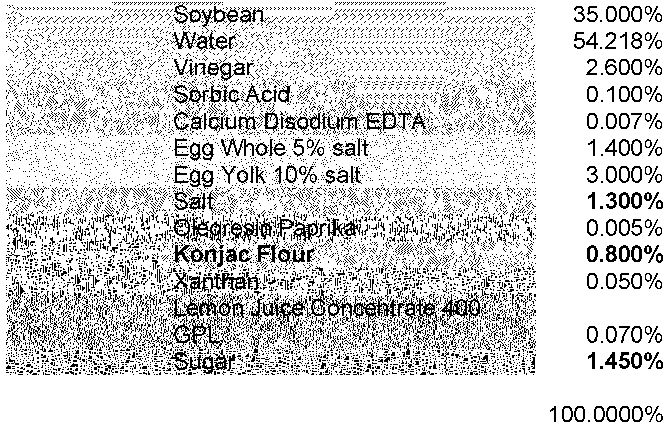

### Example 5

A mayonnaise-like product was prepared from the following ingredients.

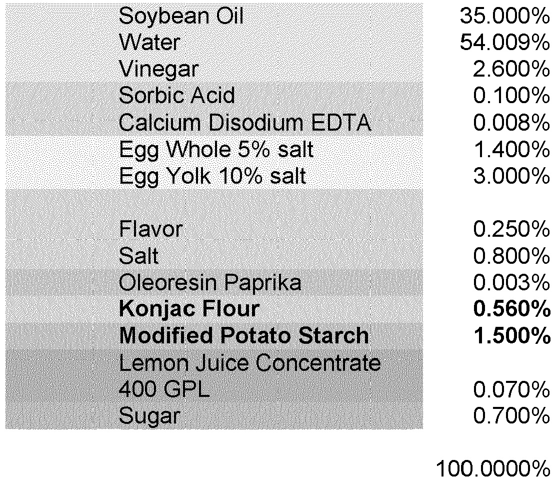

### Example 6

A mayonnaise-like product was prepared from the following ingredients.

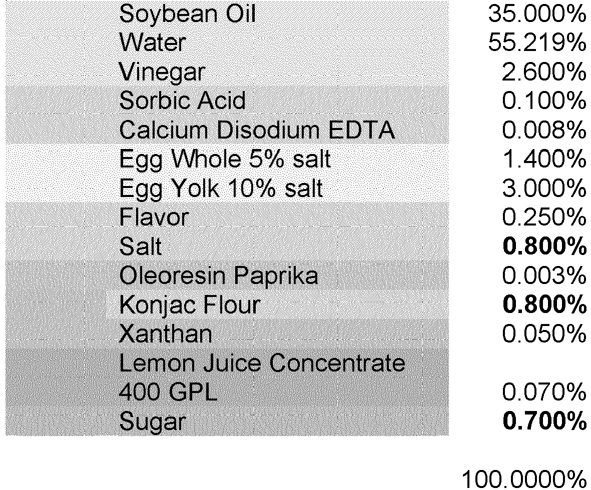

### Example 7

A mayo coleslaw drain test as described was performed on the formulas indicated.

### Coleslaw drain test, same method as 5

**example 3**

| **Sample** | **Liquid in Grams after 3 days** | |
|---|---|---|
| | | **10/15/2010** |
| Example 1 | | - |
| Example 2 | | - |
| Commercial mayonnaise extra heavy 1 | | 1.56 |
| Commercial mayonnaise extra heavy 2 | | 6.34 |
| Commercial light mayonnaise | | 144.69 |
| Commercial mayonnaise 1 | | 14.74 |
| Commercial mayonnaise 2 | | 2.38 |
| Commercial mayonnaise 3 | | 7.42 |
| Example 5 | | 57.68 |
| Example 6 | | 0 |
| Store brand commercial mayonnaise | | 3.2 |

**Tuna Salad Drain test**

| **Sample** | **Liquid in Grams after 2 days** | **Liquid in Grams after 2 days** |
|---|---|---|
| | **Test 2-1** | **Test 2-2** |
| Commercial light mayonnaise | 0.17 | 0 |
| Commercial mayonnaise 1 | 15.5 | 8.92 |
| Commercial mayonnaise 2 | 8.02 | 7.55 |
| Commercial mayonnaise 3 | 13.71 | 6.67 |
| Example 7 | 0 | - |
| Example 5 | - | 0 |
| Store brand commercial mayonnaise 1 | 2.15 | 1.65 |
| Store brand commercial mayonnaise 2 | 21.57 | 23.94 |

Example 5 shows that although the mayo contained konjac, the amylase in the coleslaw degraded the starch portion which was adding to the viscosity of the mayo. This degradation of starch leads to the destabilization of the entire mayo structure, resulting in large amounts of liquid in the drain test.

In the Coleslaw Test the high amount of amylase naturally occurring in the vegetables, degrade the starch thickener in the "light" mayo resulting in structural failure leading to large amounts of drained liquid. Binding mayo example 6 with konjac and no starch demonstrates excellent performance in both high amylase and low amylase bound salads. Any liquid over 0.1 g drained would be considered decreased product quality.

### Example 8 (Prophetic) low fat, high moisture, alternate emulsifier

| | |
|---|---|
| Water | 77.692% |
| Sugar | 8.000% |
| Soybean Oil | 8.000% |
| Citric Acid | 1.000% |
| Calcium Disodium EDTA | 0.007% |
| Polysorbate 60 | 0.300% |
| Nat Flavor | 0.100% |
| Salt | 2.000% |
| Cellulose | 0.150% |
| Color | 0.201% |
| Gum Xanthan | 0.150% |
| Konjac Flour | 2.000% |
| SODIUM BENZOATE | 0.100% |
| Lactic Acid | 0.200% |
| Phosphoric Acid | 0.100% |
| | 100.0000% |

### Example 9 "Prophetic" High Fat, Low Moisture

| | |
|---|---|
| Soybean Oil | 78.0000% |
| Water Municipal | 7.9490% |
| Egg yolks | 7.0000% |
| High Fructose Corn Syrup | 3.0000% |
| Vinegar | 3.0000% |
| Salt | 0.6300% |
| **Konjac Flour** | 0.3000% |
| Spice | 0.0500% |
| Lemon Juice Conc | 0.0500% |
| Onion and Garlic powder | 0.0070% |
| Calcium Disodium EDTA | 0.0070% |
| Natural Flavors | 0.0070% |
| | 100.0000% |

## Claims

1. A salad dressing comprising
a. 5-90 wt% water; and
b. from 0.5 to 10 wt% glucomannan, and
c. 5-90 wt% oil,
d. less than 0.1 wt% starch, and
e. an additional water phase stabilizer.

2. The salad dressing according to claim 1 including 5-80 wt% oil and 20-75 wt% water.

3. The salad dressing according to claim 1 wherein a source of the glucomannan includes konjac gum, konjac flour, konjac glucomannan, or mixtures thereof.

4. The salad dressing according to claim 1 , wherein the additional water phase stabilizer comprises one or more of xanthan gum, carrageenan and propylene glycol alginate.

5. The salad dressing according to claim 4, wherein the salad dressing comprises xanthan gum or carrageenan at a concentration from 0.05-1 wt%.

6. The salad dressing according to claim 1 including 15-50 wt% oil.

7. The salad dressing according to claim 6 including 20-40 wt% oil.

8. The salad dressing according to claim 1 further comprising a source of amylase and/or cellulase.

## Patentansprüche

1. Salatdressing, umfassend
a. 5-90 Gew.-% Wasser und
b. von 0,5 bis 10 Gew.-% Glucomannan und
c. 5-90 Gew.-% Öl,
d. weniger als 0,1 Gew.-% Stärke und
e. einen zusätzlichen Stabilisator für die Wasserphase.

2. Salatdressing nach Anspruch 1, das 5-80 Gew.-% Öl und 20-75 Gew.-% Wasser enthält.

3. Salatdressing nach Anspruch 1, wobei eine Quelle von Glucomannan Konjakgummi, Konjakmehl, Konjak-Glucomannan oder Mischungen davon enthält.

4. Salatdressing nach Anspruch 1, wobei der zusätzliche Stabilisator für die Wasserphase eines oder mehrere von Xanthangummi, Carrageen und Propylenglycolalginat umfasst.

5. Salatdressing nach Anspruch 4, wobei das Salatdressing Xanthangummi oder Carrageen in einer Konzentration von 0,05-1 Gew.-% umfasst.

6. Salatdressing nach Anspruch 1, das 15-50 Gew.-% Öl enthält.

7. Salatdressing nach Anspruch 6, das 20-40 Gew.-% Öl enthält.

8. Salatdressing nach Anspruch 1, das ferner eine Quelle von Amylase und/oder Cellulase umfasst.

## Revendications

1. Assaisonnement de salade comprenant
a. 5-90 % en masse d'eau ; et
b. de 0,5 à 10 % en masse de glucomannane, et
c. 5-90 % en masse d'huile,
d. moins de 0,1 % en masse d'amidon, et
e. un stabilisant de phase d'eau supplémentaire.

2. Assaisonnement de salade selon la revendication 1 comprenant 5-80 % en masse d'huile et 20-75 % en masse d'eau.

3. Assaisonnement de salade selon la revendication 1, dans lequel une source du glucomannane comprend de la gomme de konjac, de la farine de konjac, du glucomannane de konjac, ou des mélanges de ceux-ci.

4. Assaisonnement de salade selon la revendication 1, dans lequel le stabilisant d'eau supplémentaire comprend un ou plusieurs parmi la gomme xanthane, le carraghénane et l'alginate de propylène glycol.

5. Assaisonnement de salade selon la revendication 4, dans lequel l'assaisonnement de salade comprend de la gomme xanthane ou du carraghénane à une concentration de 0,05-1 % en masse.

6. Assaisonnement de salade selon la revendication 1 comprenant 15-50 % en masse d'huile.

7. Assaisonnement de salade selon la revendication 6 comprenant 20-40 % en masse d'huile.

8. Assaisonnement de salade selon la revendication 1 comprenant de plus une source d'amylase et/ou de cellulase.
